# EUROPEAN PATENT APPLICATION

(11) **EP 4 694 593 A1**
(43) Date of publication of application: **11.02.2026**
(21) Application number: 24803591.7
(22) Date of filing: 25.03.2024
(51) Int. Cl.: H05K 5/06, H04R 1/10, H05K 5/00, H04R 1/44, A45C 11/00

(54) **STRUCTURALLY-WATERPROOF ELECTRONIC DEVICE**

(30) Priority: 11.05.2023 KR 20230061314; 25.05.2023 KR 20230067770
(71) Applicant: Samsung Electronics Co., Ltd., Suwon-si, Gyeonggi-do 16677 (KR)
(72) Inventor: KWON, Hyoksoo, Suwon-si Gyeonggi-do 16677 (KR)
(74) Representative: Nederlandsch Octrooibureau
(86) International application number: PCT/KR2024/003675
(87) International publication number: WO 2024/232535

(57) **Abstract**

An electronic device according to one embodiment of the present disclosure may comprise a pin bracket including at least one first through-hole. The electronic device may comprise: a pin cover which is disposed on one side of the pin bracket, and which includes at least one second through-hole positioned to be aligned with the at least one first through-hole; at least one conductive terminal penetrating through each of the at least one first through-hole and the at least one second through-hole; and, in the at least one second through-hole, a first waterproof member for coupling the pin cover and the at least one conductive terminal.

## Description

### [Technical Field]

Various embodiments of the disclosure relate to an electronic device and a waterproof structure of a conductive terminal provided in the electronic device.

### [Background Art]

Portable electronic devices are becoming increasingly widespread, and many users enjoy those devices because of their convenience of portability. Among portable electronic devices, there are wearable electronic devices (e.g., wireless earphones) that users may wear on their bodies.

When a user does not use such a wearable electronic device, the device may be kept and carried in a separate electronic device (e.g., a dock, a cradle, or a case). This electronic device (or a charging device) may be adapted to not only simply accommodate the wearable electronic device therein to protect it from the outside, but also charge the wearable electronic device stored therein using a power source such as a battery. For example, each of the wearable electronic device and the charging device may have conductive terminals for charging. When storing the charging device of the wearable electronic device, the conductive terminals provided in each of those devices may come into contact with each other to perform charging of the wearable electronic device.

### [Disclosure of Invention]

### [Technical Problem]

When such an electronic device falls into water due to a user's mistake, water may penetrate into the electronic device. Any electronic components provided in the electronic device may be damaged by water penetrating into the electronic device. For example, in case where the electronic device falls into water due to a user's mistake, the charging performance of the electronic device may deteriorate as the conductive terminals of the electronic device come into contact with water and deteriorate.

Various embodiments of the present disclosure may provide an electronic device with a waterproof structure that prevents water from flowing into that device.

An electronic device according to an embodiment of the disclosure may include a pin bracket including at least one first through hole. The electronic device may include a pin cover disposed on one side of the pin bracket and including at least one second through hole positioned to be aligned with the at least one first through hole. The electronic device may include at least one conductive terminal passing through each of the at least one first through hole and the at least one second through hole. The electronic device may include a first waterproof member configured to couple the pin cover and the at least one conductive terminal in the at least one second through hole.

According to various embodiments of the disclosure, the electronic device may prevent water from penetrating into the pin cover as the pin cover coupled to the conductive terminal of the electronic device is sealed by means of the waterproof member. In such a case, water penetration into an internal space of the electronic device where electronic components are arranged may be prevented, ensuring the waterproofing performance of everyday life level of the electronic device. Further, the contact of water with a portion of the conductive terminal electrically connected to the electronic components of the electronic device may be blocked, thereby ensuring the waterproof performance for the conductive terminal itself. Accordingly, this may prevent performance degradation of the conductive terminals due to water contact when the electronic device is submerged.

Effects that can be obtained from example embodiments of the disclosure may be clearly derived and understood by those having ordinary knowledge in the technical field to which the example embodiments of the present disclosure belongs from the following description. In other words, any unintended effects of implementing example embodiments of the disclosure may also be derived by those of ordinary skill in the art from the example embodiments of the disclosure.

### [Brief Description of Drawings]

With respect to the description of the drawings, the same or similar reference numerals may be used for the same or similar components.
FIG. 1 is a block diagram of an electronic device in a network environment according to various embodiments of the disclosure.
FIG. 2 is a plan view of an electronic device illustrating an open state, according to an embodiment of the disclosure.
FIG. 3 is an exploded perspective view of an electronic device showing an open state in which some of its components are disassembled, according to an embodiment of the disclosure.
FIG. 4 is a cross-sectional view of an electronic device taken along line I-I' shown in FIG. 2, according to an embodiment of the disclosure.
FIG. 5 is a perspective view of a conductive terminal according to an embodiment of the disclosure.
FIG. 6 is a cross-sectional view of an electronic device in which a portion A shown in FIG. 4 is enlarged, according to an embodiment of the disclosure.
FIG. 7 is a cross-sectional view of an electronic device taken along line II-II' shown in FIG. 2, according to an embodiment of the disclosure.
FIG. 8 is a perspective view of a conductive terminal according to an embodiment of the disclosure.
FIG. 9 is an enlarged view of a part of a cross section of an electronic device according to an embodiment of the disclosure.
FIG. 10 is an enlarged view of a portion B shown in FIG. 2, according to one embodiment of the disclosure.
FIG. 11 is a diagram for explaining an operation of discharging water introduced into an electronic device to its outside upon penetration of water into the inside of the electronic device, according to one embodiment of the disclosure.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

In connection with the description of the drawings, similar reference numerals may be used for similar or related components.

A singular form of a noun corresponding to an item may include one or more items unless the context clearly indicates otherwise.

As used herein, each of such phrases as "A or B", "at least one of A and B", "at least one of A or B", "A, B, or C", "at least one of A, B, and C", and "at least one of A, B, or C" may include any one or all possible combinations of the items enumerated together in a corresponding one of the phrases.

As used herein, such terms as "1st", "2nd", or "first" or "second" may be used to simply distinguish a corresponding component from another, and does not limit the components in other aspect (e.g., importance or order).

It is to be understood that if an element (e.g., a first element) is referred to, with or without the term "operatively" or "communicatively", as "coupled with/to" or "connected with/to" another element (e.g., a second element), it means that the element may be coupled with the other element directly (e.g., wiredly), wirelessly, or via a third element.

As used in the disclosure, the terms "comprise", "include", "have", and the like are intended only to designate the presence of features, numerals, steps, operations, components, parts, or combinations thereof described in the disclosure, and the use of such terms is not intended to exclude the possibility of presence or addition of one or more other features, numerals, steps, operations, components, parts, or combinations thereof.

When a component is "connected", "combined", "supported" or "in contact" with another component, this includes not only when the components are directly connected, combined, supported or in contact, but also indirectly connected, combined, supported or in contact through a third component.

When a component is mentioned to be located "on" another component, this includes not only a case where one component is in contact with another component, but also a case where another component exists between the two components.

As used herein, the term "and/or" refers to a combination of multiple related components listed or any component of multiple related components listed.

Hereinafter, the operating principle and embodiments of the disclosure will be described with reference to the accompanying drawings.

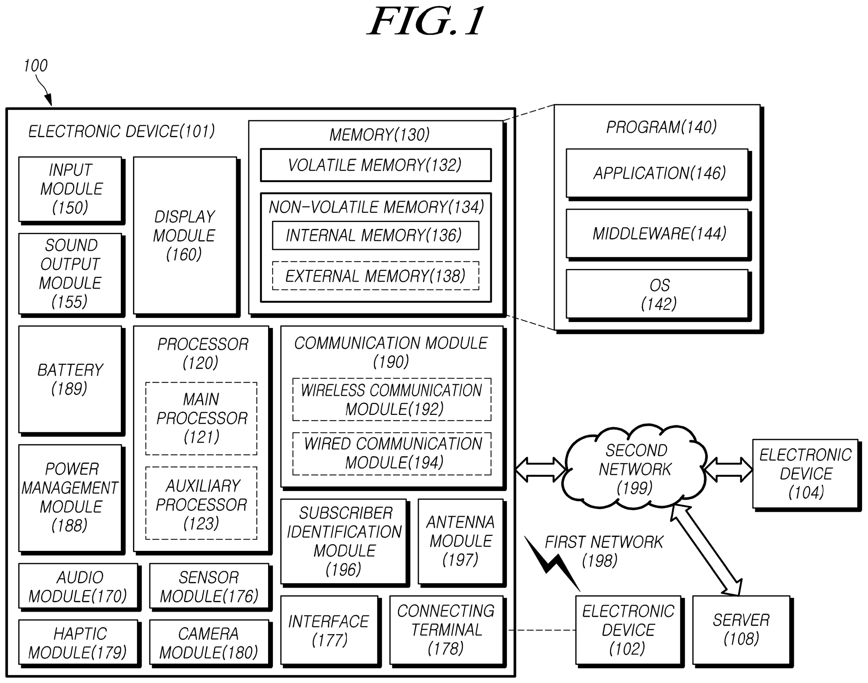

FIG. 1 is a block diagram of an electronic device 101 in a network environment 100 according to various embodiments of the present disclosure.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In an embodiment, at least one of the components (e.g., the connecting terminal 178) may be omitted from the electronic device 101, or one or more other components may be added in the electronic device 101. In an embodiment, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may, for example, control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134. The nonvolatile memory 134 may include, for example, an internal memory 136 or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., the electronic device 102)(e.g., speaker or headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment, the electronic devices are not limited to those described above.

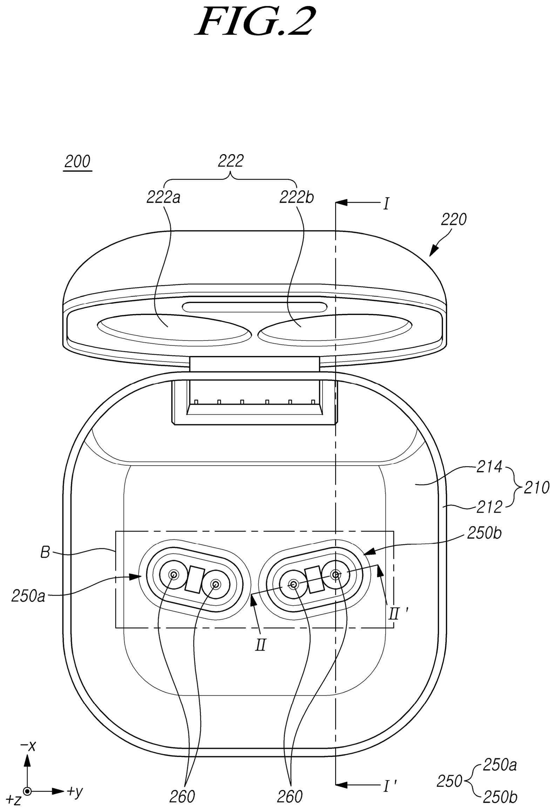

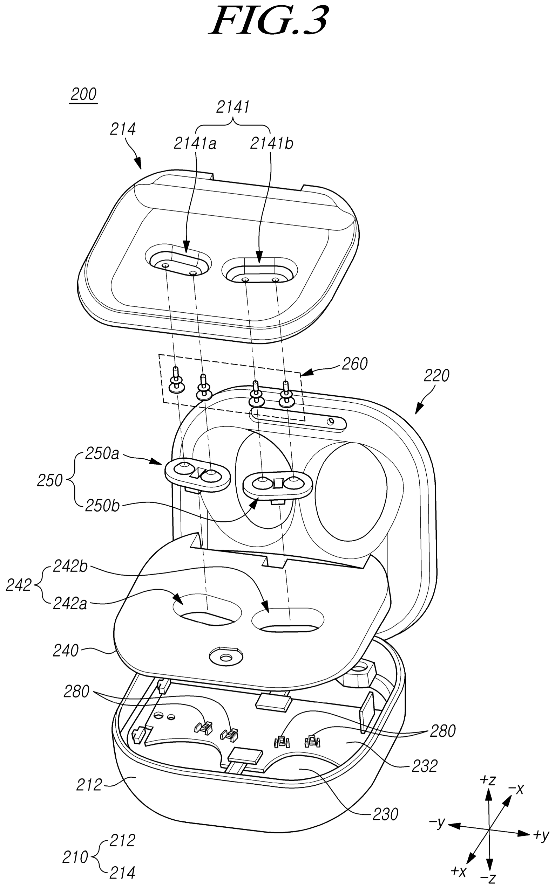

FIG. 2 is a plan view of an electronic device in an open state, according to an embodiment of the disclosure. FIG. 3 is an exploded perspective view of the electronic device showing an open state in which some of its components are disassembled, according to an embodiment of the disclosure.

A wearable electronic device (e.g., wireless earphone (not shown)) may be charged (e.g., wired charging or wireless charging) in association with a separate electronic device 200 (e.g., the electronic device 101 of FIG. 1) for charging the wearable electronic device. In such a case, the separate electronic device 200 may also be referred to as a charging device.

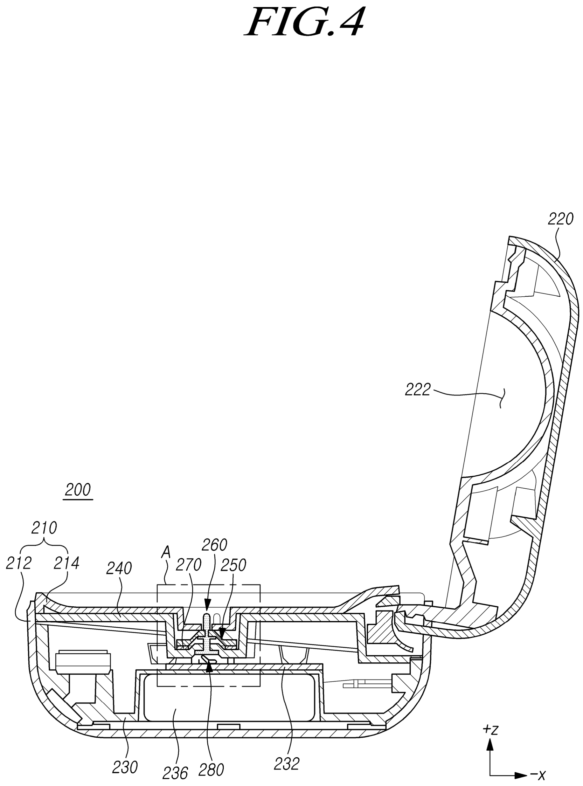

According to an embodiment, the wearable electronic device may include a charging circuit (not shown) and a battery (not shown) electrically connected to the charging circuit. According to an embodiment, the electronic device 200 may include a charging circuit (not shown) and a battery (e.g., the battery 189 of FIG. 1 or the battery 236 of FIG. 4) electrically connected to the charging circuit.

According to an embodiment, the wearable electronic device may be accommodated (or seated) in the electronic device 200 or may be detached (or separated) from the electronic device 200.

According to an embodiment, the wearable electronic device may perform a charging operation based on a voltage supplied from the electronic device 200 when seated on the electronic device 200. For example, the wearable electronic device seated in the electronic device 200 may receive power from the charging circuit of the electronic device 200 via the charging circuit of the wearable electronic device and charge the battery of the wearable electronic device based on the power transmitted.

According to an embodiment, the wearable electronic device may operate to turn on the power of the wearable electronic device when it is separated from the electronic device 200 or to turn off the power of the wearable electronic device when it is accommodated in the electronic device 200.

According to an embodiment, the electronic device 200 may be implemented in various forms. For example, the electronic device 200 may be implemented in the form of any one of a dock, a case, or a cradle, but the disclosure is not limited thereto.

Hereinafter, for convenience of explanation, the electronic device 200 of the wearable electronic device according to one embodiment implemented in the form of a case will be described, but the disclosure is not limited thereto.

Referring to FIGS. 2 and 3, the electronic device 200 of the wearable electronic device according to an embodiment may include housings 210 and 220, a circuit board bracket 230, a pin bracket 240, a pin cover 250, or at least one conductive terminal 260.

According to an embodiment, the housings 210 and 220 of the electronic device 200 may make up an external appearance of the electronic device 200. According to an embodiment, the housings 210 and 220 may be configured to receive a wearable electronic device therein. According to an embodiment, the housings 210 and 220 may include a first housing 210 and a second housing 220 rotatably connected to the first housing 210.

According to an embodiment, the first housing 210 may make up a lower exterior of the electronic device 200. The first housing 210 may be referred to as a main body of the electronic device 200.

According to an embodiment, the first housing 210 may include a body 212 having a concave bowl shape. In an embodiment, various electronic components (e.g., a circuit board 232, a battery 236, a conductive terminal 260, etc.) of the electronic device 200 may be disposed inside the body 212.

According to an embodiment, the first housing 210 may include a cover 214 coupled to the body 212 on an upper side (e.g., +Z-axis direction) of the body 212. In an embodiment, the cover 214 may be configured to cover the upper side (e.g., +Z-axis direction) of the body 212. When the body 212 and the cover 214 are coupled, the electronic components of the electronic device 200 disposed inside the body 212 may be blocked from the outside.

According to an embodiment, the cover 214 may include at least one seating portion 2141 recessed from an upper surface of the cover 214 (e.g., a surface facing the +Z axis). In an embodiment, at least a portion of the wearable electronic device may be seated on the seating portion 2141.

According to an embodiment, at least one seating portion 2141 may be provided in a number corresponding to the number of the wearable electronic devices. For example, when the wearable electronic device includes a pair of left/right wireless earphones, the seating portions 2141a and 2141b may be provided in one pair to correspond to each of the pair of left/right wireless earphones.

When at least some of the wearable electronic device is mounted onto a pair of seating portions 2141a and 2141b, charging of the wearable electronic device may be performed as the conductive terminal (not shown) provided on the wearable electronic device for charging comes into contact with the conductive terminal 260 of the electronic device 200.

According to an embodiment, the second housing 220 may make up an upper exterior of the electronic device 200.

According to an embodiment, the second housing 220 may be rotatably connected to the first housing 210. In an embodiment, the second housing 220 may be rotatably connected to the first housing 210 by means of a hinge (not shown).

In an embodiment, the second housing 220 may rotate clockwise (or counterclockwise) by means of a hinge (not shown). When the second housing 220 is rotated, the first housing 210 and the second housing 220 may be brought into contact with each other and the second housing 220 may cover an upper side of the first housing 210 (specifically, the upper surface of the cover 214). When the second housing 220 rotates clockwise (or counterclockwise) while the wearable electronic device is seated in the first housing 210, the wearable electronic device seated in the first housing 210 may be shielded by the second housing 220 so as to be protected from the outside. Simultaneously, the charging of the wearable electronic device may be performed in the electronic device 200. Such a state in which the first housing 210 and the second housing 220 are brought into contact with each other by rotation of the second housing 220 may be referred to as a charging state or a closed state.

In an embodiment, the second housing 220 may rotate counterclockwise (or clockwise) by means of the hinge (not shown). When the second housing 220 rotates, the first housing 210 and the second housing 220 may be spaced apart from each other, and the upper side of the first housing 210 (specifically, the upper surface of the cover 214) may be visible from the outside. When the second housing 220 rotates counterclockwise (or clockwise) while the wearable electronic device is seated in the first housing 210, the wearable electronic device seated in the first housing 210 may be visible from the outside. Such a state in which the first housing 210 and the second housing 220 are maximally separated by the rotation of the second housing 220 may be referred to as an open state.

According to an embodiment, the second housing 220 may include at least one accommodation portion 222 recessed from a bottom surface of the second housing 220. The bottom surface of the second housing 220 may refer to one surface of the second housing 220 facing the top surface of the cover 214 while the electronic device 200 is closed.

According to an embodiment, the at least one accommodation portion 222 may be provided in a number corresponding to the number of wearable electronic devices. For example, when the wearable electronic device includes a pair of left/right wireless earphones, the accommodation portions 222a and 222b may be provided in one pair to correspond to each of the pair of left/right wireless earphones.

According to an embodiment, the circuit board bracket 230 of the electronic device 200 may be disposed inside the body 212 of the first housing 210. According to an embodiment, the circuit board bracket 230 may be coupled to the body 212. In an embodiment, the circuit board bracket 230 may be configured to fix a circuit board 232 (e.g., a PCB) to the upper surface (e.g., a surface facing +Z axis).

According to an embodiment, the circuit board 232 may include a charging circuit (not shown) for charging the wearable electronic device. In an embodiment, the charging circuit of the circuit board 232 may be electrically connected to the battery 236. In an embodiment, the charging circuit of the circuit board 232 may be electrically connected to the conductive terminal 260. When the wearable electronic device is seated in the electronic device 200, electric power may be supplied from the conductive terminal 260 of the electronic device 200 to the conductive terminal of the wearable electronic device seated in the electronic device 200, so that the wearable electronic device may be charged by the electronic device 200.

According to an embodiment, the pin bracket 240 of the electronic device 200 may be disposed in the body 212 of the first housing 210. In an embodiment, the pin bracket 240 may be disposed between the body 212 of the first housing 210 and the cover 214 of the first housing 210. In an embodiment, the pin bracket 240 may be disposed above the circuit board bracket 230. The upper side of the circuit board bracket 230 may be covered by the pin bracket 240. In an embodiment, the pin bracket 240 may be coupled to the circuit board bracket 230.

According to an embodiment, the pin bracket 240 may include at least one pin accommodation portion 242 recessed from the upper surface (e.g., the surface facing +Z axis) of the pin bracket 240.

According to an embodiment, the at least one pin accommodation portion 242 may be provided in a number corresponding to the number of wearable electronic devices. For example, when the wearable electronic device includes a pair of left/right wireless earphones, the pin accommodation portions 242a and 242b may be provided in one pair to correspond to each of the pair of left/right wireless earphones.

According to an embodiment, the pin cover 250 of the electronic device 200 may be coupled to the conductive terminal 260. In an embodiment, the conductive terminal 260 may be coupled to pass through the pin cover 250. In such a case, at least a portion of the conductive terminal 260 may be exposed to the outside of the pin cover 250.

According to an embodiment, the pin cover 250 may be made of an elastic material. The pin cover 250 may be made of, for example, rubber. When an external force is applied directly or indirectly to the pin cover 250, the shape of the pin cover 250 may be deformed based on the external force due to the elastic characteristics of the pin cover 250.

According to an embodiment, the pin cover 250 may be accommodated in the pin accommodation portion 242 of the pin bracket 240. In an embodiment, the pin cover 250 may be coupled to the pin bracket 240.

According to an embodiment, the pin covers 250 may be provided in a number corresponding to the number of wearable electronic devices. For example, when the wearable electronic device includes a pair of left/right wireless earphones, the pin covers 250a and 250b may be configured in one pair to correspond to the pair of left/right wireless earphones.

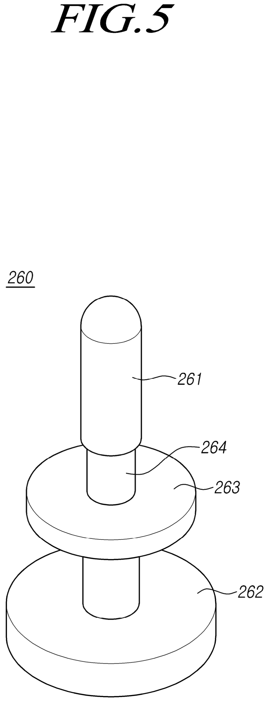

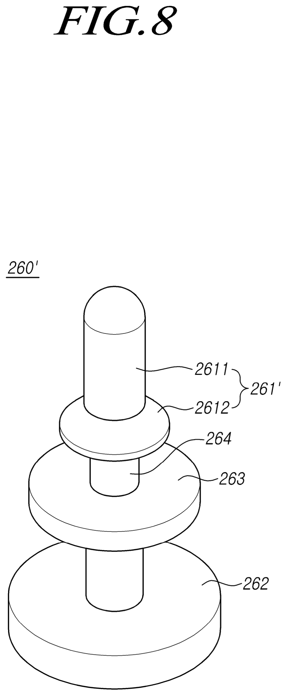

According to an embodiment, at least one conductive terminal 260 of the electronic device 200 may be made of a conductive material (e.g., metal). When the wearable electronic device is accommodated in the electronic device 200, the conductive terminal of the wearable electronic device and the conductive terminal 260 of the electronic device 200 contact each other, and charging of the wearable electronic device may be then performed. In an embodiment, the conductive terminal 260 may have a pin shape. The conductive terminal 260 may be implemented, for example, in a pogo pin type, but the disclosure is not limited thereto. Hereinafter, a specific structure of the conductive terminals 260 and 260' will be described later with reference to FIGS. 5 and 8.

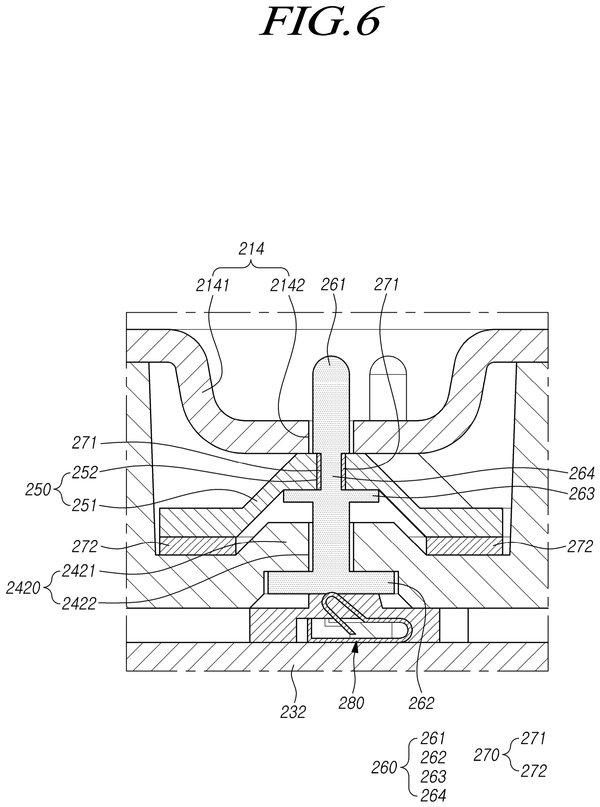

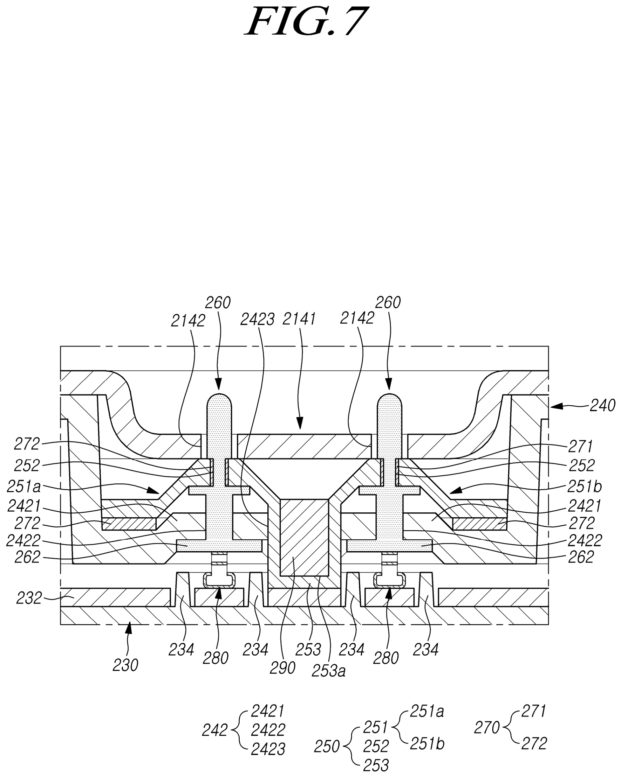

FIG. 4 is a cross-sectional view of an electronic device taken along the line I-I' shown in FIG. 2, according to an embodiment of the disclosure. FIG. 5 is a perspective view of a conductive terminal according to an embodiment of the disclosure. FIG. 6 is an enlarged cross-sectional view of a part A shown in FIG. 4, according to an embodiment of the disclosure. FIG. 7 is a cross-sectional view of an electronic device taken along the line II-II' shown in FIG. 2, according to an embodiment of the disclosure.

Hereinafter, a waterproof structure of the electronic device 200 according to an embodiment will be described with reference to FIGS. 4 to 7.

According to an embodiment, the electronic device 200 may include housings 210 and 220, a circuit board bracket 230, a pin bracket 240, a pin cover 250, or at least one conductive terminal 260.

The configurations of the housings 210 and 220, the circuit board bracket 230, the pin bracket 240, the pin cover 250, or at least one conductive terminal 260 of the electronic device 200 of FIGS. 4 to 7 may be partially or entirely the same as those of the housings 210 and 220, the circuit board bracket 230, the pin bracket 240, the pin cover 250, or the at least one conductive terminal 260 of the electronic device 200 of FIGS. 2 and 3.

Referring to FIGS. 4 to 7, the conductive terminal 260 according to an embodiment may include a head portion 261, a stopper portion 262, a guide portion 263, and a recessed portion 264.

According to an embodiment, the head portion 261 of the conductive terminal 260 may be positioned at an upper end (e.g., one end facing +Z axis direction) of the conductive terminal 260. In an embodiment, the head portion 261 may make up at least a part of the upper portion of the conductive terminal 260. In an embodiment, the head portion 261 may be a part of the conductive terminal 260 exposed to the outside of the first housing 210 in a state in which the conductive terminal 260 is assembled to the first housing 210.

According to an embodiment, the stopper portion 262 of the conductive terminal 260 may be positioned at the lower end (e.g., one end facing -Z axis direction) of the conductive terminal 260. In an embodiment, the stopper portion 262 may make up at least a part of the lower portion of the conductive terminal 260.

In an embodiment, the stopper portion 262 may extend at the lower end of the conductive terminal 260 along a circumference of the conductive terminal 260. In an embodiment, the stopper portion 262 may protrude radially outward of at least one first through hole 2422 of the pin bracket 240 to be described later. In an embodiment, the stopper portion 262 may have a disk shape as a whole, but the disclosure is not limited thereto.

According to an embodiment, the guide portion 263 of the conductive terminal 260 may be positioned at an intermediate portion of the conductive terminal 260. For example, the guide portion 263 may be positioned between the head portion 261 and the stopper portion 262. In an embodiment, the guide portion 263 may extend along the circumference of the conductive terminal 260 at an intermediate portion of the conductive terminal 260. In an embodiment, the guide portion 263 may protrude radially outward of at least one second through hole 252 of the pin cover 250 to be described later. In an embodiment, the guide portion 263 may have a substantially disk shape, but the disclosure is not limited. In an embodiment, the diameter of the guide portion 263 may be designed to be less than the diameter of the stopper portion 262, but the disclosure is not limited.

According to an embodiment, the recessed portion 264 of the conductive terminal 260 may be positioned between the head portion 261 and the guide portion 263. In an embodiment, the recessed portion 264 may be recessed radially inward of at least one second through hole 252 of the pin cover 250 from the circumferential surface of the conductive terminal 260. In an embodiment, the diameter of the recessed portion 264 may be designed to be less than that of the head portion 261.

According to an embodiment, the conductive terminal 260 may be disposed to penetrate the pin bracket 240, the pin cover 250, and the cover 214. In an embodiment, the conductive terminal 260 may pass through the holes 2422, 252, and 2142 provided in each of the pin bracket 240, the pin cover 250, and the cover 214. In an embodiment, the conductive terminal 260 may be positioned inside the holes 2422, 252, and 2142. In an embodiment, the holes 2422, 252, and 2142 provided in each of the pin bracket 240, the pin cover 250, and the cover 214 may be positioned to be aligned with each other. In an embodiment, the pin bracket 240, the pin cover 250, and the cover 214 may be sequentially arranged from the lower side (e.g., -Z axis direction) to the upper side (e.g., +Z axis direction) of the electronic device 200.

According to an embodiment, the pin accommodation portion 242 of the pin bracket 240 may include a first through portion 2421, at least one first through hole 2422, and a magnet hole 2423.

According to an embodiment, the first through portion 2421 may protrude from one surface (e.g., the upper surface) of the pin accommodation portion 242. In an embodiment, at least one first through hole 2422 through which the conductive terminal 260 passes may be formed in the first through portion 2421. In an embodiment, the at least one first through hole 2422 may be provided as a pair. In an embodiment, each of the pair of first through holes 2422 may be positioned to be aligned with the holes 252 and 2142 provided in each of the pin cover 250 and 214. In an embodiment, the pair of first through holes 2422 may be arranged to be spaced apart from each other with the magnet hole 2423 interposed therebetween. According to an embodiment, the magnet hole 2423 may be configured such that a magnet accommodation portion 253 of the pin cover 250 to be described later is inserted thereto.

When the conductive terminal 260 ascends by receiving an elastic force from an elastic member 280 to be described later, the ascending height of the conductive terminal 260 may be limited as the stopper portion 262 of the conductive terminal 260 and one surface (e.g., the bottom surface) of the first through portion 2421 adjacent to the first through hole 2422 come into contact with each other. For example, as the stopper portion 262 of the conductive terminal 260 is caught in the first through hole 2422, the ascending height of the conductive terminal 260 is limited.

According to an embodiment, at least one stopper protrusion 234 may be disposed on one surface (e.g., an upper surface) of the circuit board bracket 230. In an embodiment, the at least one stopper protrusion 234 may be positioned on the upper surface of the circuit board bracket 230 to face the conductive terminal 260. In an embodiment, the at least one stopper protrusion 234 may protrude from the upper surface of the circuit board bracket 230. The at least one stopper protrusion 234 may penetrate the circuit board 232.

When the conductive terminal 260 descends by an external force (e.g., the weight of the wearable electronic device when seated on the electronic device 200), the stopper portion 262 of the conductive terminal 260 and the at least one stopper protrusion 234 of the circuit board bracket 230 come into contact with each other, so that the descending height of the conductive terminal 260 may be limited.

According to an embodiment, the pin cover 250 may include at least one second through portion 251, at least one second through hole 252, and a magnet accommodation portion 253.

According to an embodiment, the at least one second through portion 251 may protrude from one surface (e.g., the upper surface) of the pin cover 250. In an embodiment, the at least one second through portion 251 may have substantially a truncated conical shape as a whole. In an embodiment, the second through hole 252 through which the conductive terminal 260 passes may be formed at a center portion of the at least one second through portion 251. In an embodiment, at least one second through portions 251 may be provided as a pair. In an embodiment, the pair of second through portions 251a and 251b may be arranged to be spaced apart from each other with the magnet accommodation portion 253 interposed therebetween.

According to an embodiment, when the conductive terminal 260 and the pin cover 250 are coupled, the guide portion 263 of the conductive terminal 260 may come into contact with the vicinity of one surface (e.g., the bottom surface) of the second through portion 251 of the pin cover 250 adjacent to at least one second through hole 252. In such a case, the guide portion 263 of the conductive terminal 260 may guide the pin cover 250 to be seated on the pin bracket 240. When a waterproof member (e.g., a first waterproof member 271) to be described later is filled in the second through hole 252 for coupling of the conductive terminal 260 and the pin cover 250, the guide portion 263 of the conductive terminal 260 may block the filled waterproof member from being introduced into the inner space of the pin cover 250.

According to an embodiment, the magnet accommodation portion 253 may be configured to accommodate the magnet 290 therein. In an embodiment, a groove 253a recessed downward may be formed in the central portion of the magnet accommodation portion 253, and the magnet 290 may be inserted into and fixed to the groove 253a.

According to an embodiment, the magnet 290 may be fixed inside the first housing 210 by a magnet accommodation portion 253 of the pin cover 250. When the first housing 210 of the wearable electronic device is seated, a magnetic interaction between the magnet 290 provided inside the first housing 210 and a magnet (not shown) provided inside the wearable electronic device may prevent the wearable electronic device from detaching from the electronic device 200.

According to an embodiment, the pin cover 250 may be sealed from the outside by a waterproof member 270. For example, the waterproof member 270 may prevent water from penetrating into the pin cover 250. A portion of the conductive terminal 260 electrically connected to the circuit board 232 (e.g., the remaining portions 262, 263, and 264 except for the head portion 261 exposed outside of the conductive terminal 260) may be protected from contact with water by the waterproof member 270, thereby maintaining the performance of the conductive terminal 260.

According to an embodiment, the waterproof member 270 may include a first waterproof member 271 and a second waterproof member 272.

According to an embodiment, the first waterproof member 271 may be configured to couple the conductive terminal 260 to the pin cover 250. For example, the conductive terminal 260 and the pin cover 250 may be coupled to each other by the first waterproof member 271 in a bonding manner. The first waterproof member 271 may also be referred to as an adhesive. In an embodiment, the first waterproof member 271 may be positioned inside the second through hole 252. In an embodiment, the first waterproof member 271 may be interposed between the recessed portion 264 of the conductive terminal 260 and the second through portion 251. The conductive terminal 260 may be coupled to the pin cover 250 by the first waterproof member 271, and when an external force is applied to the conductive terminal 260, the conductive terminal 260 may move (e.g., move up and down) in a direction of the external force applied as the pin cover 250 is elastically deformed by the external force.

Further, as the conductive terminal 260 is coupled to the pin cover 250 inside the second through hole 252 by the first waterproof member 271, penetration of water into the pin cover 250 through a gap between the pin cover 250 and the conductive terminal 260 may be prevented.

According to an embodiment, the second waterproof member 272 may be configured to couple the pin cover 250 and the pin bracket 240. In an embodiment, an adhesive material may be coated onto both surfaces (e.g., upper/lower surfaces) of the second waterproof member 272. As the pin cover 250 is attached to the pin bracket 240 by the second waterproof member 272, penetration of water may be prevented into the pin cover 250 through a gap between the pin cover 250 and the pin bracket 240. In an embodiment, the second waterproof member 272 may be disposed to surround the at least one first through hole 2422. In an embodiment, the second waterproof member 272 may have a shape corresponding to an edge of the pin cover 250. For example, the second waterproof member 272 may form a closed loop. The second waterproof member 272 may be referred to as a waterproof tape.

According to an embodiment, at least one third through hole 2142 may be formed in the seating portion 2141 of the cover 214. In an embodiment, at least a part (e.g., the head portion 261) of the conductive terminal 260 may pass through the third through hole 2142 to be exposed to the outside. When the wearable electronic device is seated in the electronic device 200, at least a part of the exposed conductive terminal 260 comes into contact with the conductive terminal of the wearable electronic device seated on the seating portion 2141 to enable charging of the wearable electronic device.

According to an embodiment, the elastic member 280 may be disposed to be in contact with the conductive terminal 260 underneath the conductive terminal 260 (e.g., in -Z axis direction). In an embodiment, the elastic member 280 may be disposed on one surface (e.g., the upper surface) of the circuit board 232. In an embodiment, the elastic member 280 may be arranged in between a pair of stopper protrusions 234 on the one surface of the circuit board 232. In an embodiment, the elastic member 280 may be electrically connected to the charging circuit provided on the circuit board 232.

According to an embodiment, the elastic member 280 may be configured to contact the conductive terminal 260 to apply an elastic force to the conductive terminal 260. The elastic member 280 may be implemented by, for example, a C-clip or a spring, but the disclosure is not limited thereto. When the elastic member 280 is implemented of a C-clip, the C-clip may be designed to have an elastic force of, for example, 60 to 85 gf.

In case where an external force is applied to the conductive terminal 260 to descend, the elastic member 280 in contact with the conductive terminal 260 may be compressed by the conductive terminal 260 in a certain range of displacement. When the external force applied to the conductive terminal 260 is dissipated, an elastic force (or restoring force) due to the compression is applied to the conductive terminal 260, so that the conductive terminal 260 may rise to its original position. By this operation, the conductive terminal 260 may move in the vertical direction in the holes 242 and 2142 provided in the pin bracket 240 and the cover 214.

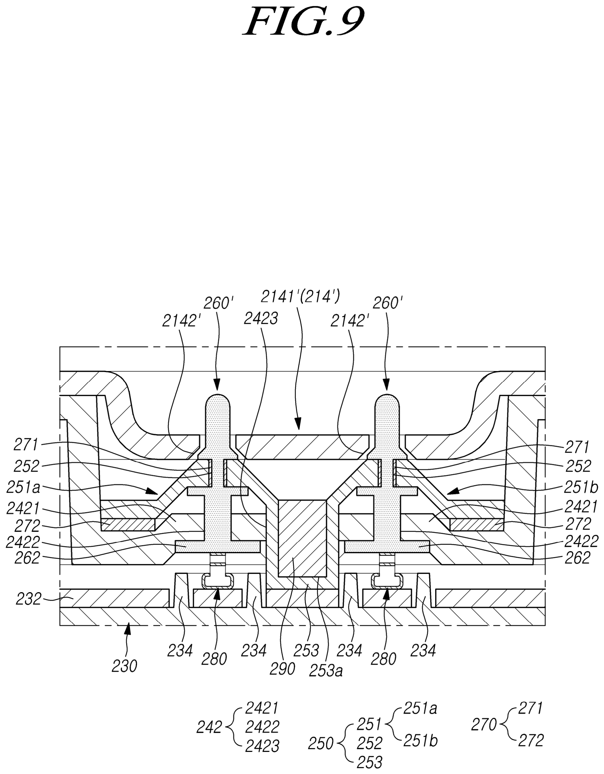

FIG. 8 is a perspective view of a conductive terminal according to an embodiment of the disclosure. FIG. 9 is an enlarged view of a part of a cross section of an electronic device according to an embodiment of the disclosure.

FIGS. 8 and 9 are diagrams for explaining an example of modification of the conductive terminal 260 shown in FIGS. 5 to 7 described above. More specifically, FIG. 9 is a cross-sectional view of an electronic device having a conductive terminal 260' shown in FIG. 8 taken along the same direction as FIG. 7.

According to an embodiment, the electronic device may include a housing, a circuit board bracket 230, a pin bracket 240, a pin cover 250, at least one conductive terminal 260', a waterproof member 270, an elastic member 280, or a magnet 290. The configurations of the housing, the circuit board bracket 230, the pin bracket 240, the pin cover 250, the at least one conductive terminal 260', the waterproof member 270, the elastic member 280, or the magnet 290 of the electronic device of FIG. 9 may be partially or substantially entirely the same as those of the housing 210 and 220, the circuit board bracket 230, the pin bracket 240, the pin cover 250, the at least one conductive terminal 260, the waterproof member 270, the elastic member 280, or the magnet 290 of the electronic device 200 of FIGS. 2 to 8.

The conductive terminal 260' illustrated in FIG. 8 may be substantially the same as the conductive terminal 260 illustrated in FIGS. 5 to 7 in its functionality, shape and structure. Hereinafter, for convenience of explanation, the same reference numerals are used for components substantially the same as or similar to those illustrated in FIGS. 5 to 7, among the components of the conductive terminal 260' illustrated in FIGS. 8 and 9, and their detailed descriptions of any redundant contents will be omitted.

Referring to FIGS. 8 and 9, a head portion 261' of the conductive terminal 260' according to an embodiment may include a first part 2611 and a second part 2612.

According to an embodiment, the first part 2611 of the head portion 261' may make up an upper portion of the head portion 261'. In an embodiment, the first part 2611 may be the uppermost end of the conductive terminal 260'.

According to an embodiment, the second part 2612 of the head portion 261' may make up a lower portion of the head portion 261'. In an embodiment, the second part 2612 may be positioned between the first part 2611 of the head portion 261' and the recessed portion 264. In an embodiment, the second part 2612 may extend along the circumference of the head portion 261'. In an embodiment, the second part 2612 may protrude outward in a radial direction of a third through hole 2142' of the cover 214'. In an embodiment, the second part 2612 may have substantially a truncated cone shape as a whole.

According to an embodiment, the third through hole 2142' of the cover 214' may have a shape at least partially substantially corresponding to the second part 2612 of the head portion 261'.

When an external force is applied to the conductive terminal 260' in a lateral direction, the inner surfaces of the second part 2612 and the third through hole 2142' come into contact with each other, thereby preventing the eccentricity of the conductive terminal 260'. As the eccentricity of the conductive terminal 260' is prevented, stable charging of the wearable electronic device seated on the seating portion 2141' may be performed. The second part 2612 of the head portion 261' may also be referred to as an eccentric prevention part.

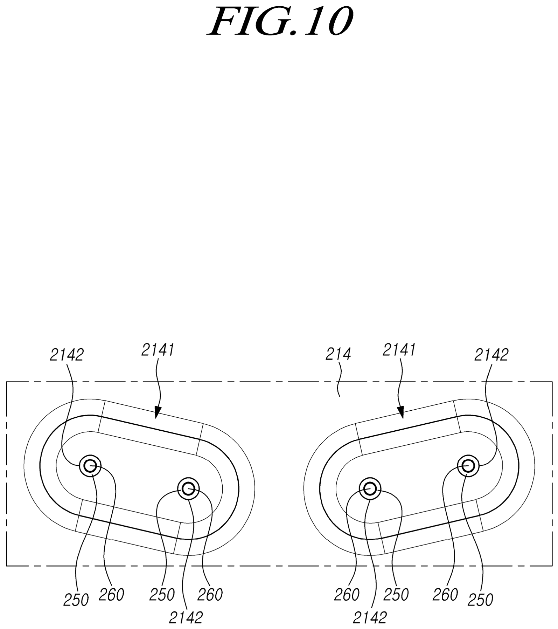

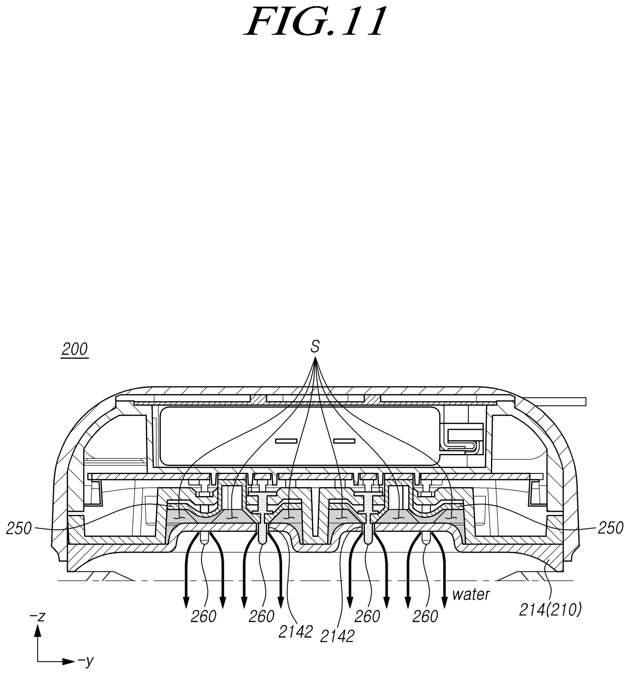

FIG. 10 is an enlarged view of part B shown in FIG. 2 according to an embodiment of the disclosure. FIG. 11 is a view illustrating an operation for discharging water introduced into an electronic device to the outside in case where water penetrates into the electronic device, according to an embodiment of the disclosure.

According to an embodiment, the electronic device 200 may include a first housing 210, a pin cover 250, or at least one conductive terminal 260. The configurations of the first housing 210, the pin cover 250, or at least one conductive terminal 260 of the electronic device 200 of FIGS. 10 and 11 may be partially or entirely the same as those of the first housing 210, the pin cover 250, or at least one conductive terminal 260 of FIGS. 2 to 7.

Referring to FIGS. 10 and 11, according to an embodiment, at least one third through hole 2142 may be provided in the cover 214 of the first housing 210. At least a portion of the conductive terminal 260 may pass through the at least one third through hole 2142, and the at least a portion of the conductive terminal 260 passing through the third through hole 2142 may be positioned inside the third through hole 2142. A certain gap may be formed in between the conductive terminal 260 passing through the third through hole 2142 and the third through hole 2142. When the electronic device 200 is submerged, as in a case where a user drops it into water, water may penetrate into an interior space of the first housing 210 (e.g., a space S formed between the pin cover 250 and the pin bracket 240) through the gap. In order to remove water introduced into the inner space S of the first housing 210, the user may repeatedly shake off the electronic device 200 in its inverted state to discharge the water inside the first housing 210 to the outside through the at least one third through hole 2142.

As shown in the drawings, the present document describes the disclosure focusing on the conductive terminals provided in the electronic device implemented as a charging device, but the disclosure is not limited thereto, and it may also be applied to pin-shaped conductive terminals provided in various electronic devices.

The electronic device 200 according to an embodiment of the disclosure may include a pin bracket 240 including at least one first through hole 2422. The electronic device 200 may include a pin cover 250 disposed on one side of the pin bracket 240 and including at least one second through hole 252 positioned to be aligned with the at least one first through hole 2422. The electronic device 200 may include at least one conductive terminal 260 and 260' penetrating each of the at least one first through hole 2422 and the at least one second through hole 252. The electronic device 200 may include a first waterproof member 271 for coupling the pin cover 250 to the at least one conductive terminal 260 and 260' in the at least one second through hole 252.

According to an embodiment, the at least one conductive terminal 260 and 260' may include a recessed portion 264 that is recessed toward the inner side in a radial direction of the at least one second through hole 252 at a corresponding position of the at least one second through hole 252.

According to an embodiment, the electronic device 200 may include a second waterproof member 272 surrounding the at least one first through hole 2422 and coupling the pin cover 250 to the pin bracket 240.

According to an embodiment, the electronic device 200 may include at least one elastic member 280 configured to elastically support the at least one conductive terminal 260 and 260' at the other side opposite to the one side of the pin bracket 240.

According to an embodiment, the electronic device 200 may include a body 212 making up at least a part of an exterior of the electronic device 200. The electronic device 200 may include a circuit board bracket 230 disposed between the other side opposite to the one side of the pin bracket 240 and the body 212, and having a circuit board 232 disposed on one surface thereof. The circuit board bracket 230 may include at least one stopper protrusion 234 protruding from the one surface to face the at least one conductive terminal 260 and 260'.

According to an embodiment, the at least one conductive terminal 260 and 260' may include a stopper portion 262 positioned on the other side opposite to the one side of the pin bracket 240 and extending radially outward of the at least one first through hole 2422.

According to an embodiment, the electronic device 200 may include a cover 214' arranged to cover one side of the pin cover 250, and including at least one third through hole 2142', which is positioned to be aligned with each of the at least one first through hole 2422 and the at least one second through hole 252, and through which a portion of the at least one conductive terminal 260' passes. The at least one conductive terminal 260' may include an eccentricity prevention portion 2612, which is positioned inside the at least one third through hole 2142' and extends radially outward from at least one third through hole 2142' such that a diameter thereof increases toward the other side opposite to the one side of the pin cover 250.)

According to an embodiment, the at least one third through hole 2142' may have a shape at least partially substantially corresponding to the shape of the eccentricity prevention portion 2612.

According to an embodiment, the pin cover 250 may be made of an elastic material.

According to an embodiment, the second waterproof member 272 may be positioned between the pin cover 250 and the pin bracket 240 and extend along an edge of the pin cover 250 to form a closed loop.

According to an embodiment, the elastic member 280 may include a C-clip.

According to an embodiment, the electronic device 200 may include at least one elastic member 280 configured to elastically support the at least one conductive terminal 260 and 260' at the other side opposite to the one side of the pin bracket 240. The at least one stopper protrusion 234 may be provided in one or more pairs to be arranged on both sides of each of the elastic members 280.

According to an embodiment, the at least one conductive terminal 260 and 260' may include a head portion 261 that passes through at least one third through hole 2142 and 2142' of the cover 214 and 214' and is exposed to the outside.

According to an embodiment, the covers 214 and 214' may include at least one seating portion 2141 and 2141' that is recessed from one surface of the covers 214 and 214', and on which a separate electronic device is seated.

## Claims

1. An electronic device (200), comprising:
a pin bracket (240) including at least one first through hole (2422);
a pin cover (250) disposed on one side of the pin bracket (240) and including at least one second through hole (252) positioned to be aligned with the at least one first through hole (2422);
at least one conductive terminal (260, 260') passing through each of the at least one first through hole (2422) and the at least one second through hole (252); and
a first waterproof member (271) coupling the pin cover (250) and the at least one conductive terminal (260, 260') in the at least one second through hole (252).

2. The electronic device of claim 1, wherein the at least one conductive terminal (260, 260') comprises a recessed portion (264) that is recessed toward a radially inner side of the at least one second through hole (252) at a corresponding position of the at least one second through hole (252).

3. The electronic device of claim 2, wherein the first waterproof member (271) is positioned between the recessed portion (264) of the at least one conductive terminal (260, 260') and the at least one second through hole (252).

4. The electronic device of any one of claims 1 to 3, comprising a second waterproof member (272) surrounding the at least one first through hole (2422) and coupling the pin cover (250) and the pin bracket (240).

5. The electronic device of claim 4, wherein the second waterproof member (272) is positioned between the pin cover (250) and the pin bracket (240) and extends along an edge of the pin cover (250) to form a closed loop.

6. The electronic device of any one of claims 1 to 5, comprising at least one elastic member (280) configured to elastically support the at least one conductive terminal (260, 260') on the other side opposite to the one side of the pin bracket (240).

7. The electronic device of claim 6, wherein the elastic member (280) is a C-clip.

8. The electronic device of any one of claims 1 to 7, further comprising:
a body (212) making up at least a part of an exterior of the electronic device (200); and
a circuit board bracket (230) disposed between the body (212) and the other side opposite to the one side of the pin bracket (240) and having a circuit board (232) disposed on one surface thereof,
wherein the circuit board bracket (230) includes at least one stopper protrusion (234) protruding from the one side to face the at least one conductive terminal (260, 260').

9. The electronic device of claim 8, comprising:
at least one elastic member (280) configured to elastically support the at least one conductive terminal (260, 260') on the other side opposite to the one side of the pin bracket (240),
wherein the at least one stopper protrusion (234) is arranged in at least one pair so as to be positioned on both sides of each elastic member (280).

10. The electronic device of any one of claims 1 to 9, wherein the at least one conductive terminal (260, 260') includes a stopper portion (262) positioned on the other side opposite to the one side of the pin bracket (240) and extending toward a radially outer side of the at least one first through hole (2422).

11. The electronic device of any one of claims 1 to 10, comprising:
a cover (214, 214') arranged to cover one side of the pin cover (250), and including at least one third through hole (2142, 2142'), which is positioned to be aligned with each of the at least one first through hole (2422) and the at least one second through hole (252), and through which a portion of the at least one conductive terminal (260, 260') passes,
wherein the at least one conductive terminal (260') includes an eccentricity prevention portion (2612), which is positioned inside the at least one third through hole (2142') and extends radially outward from at least one third through hole (2142') such that a diameter thereof increases toward the other side opposite to the one side of the pin cover (250).

12. The electronic device of claim 11, wherein the at least one third through hole (2142') has a shape that substantially corresponds to the shape of the eccentricity prevention portion (2612) at least partially.

13. The electronic device of claim 11 or 12, wherein the at least one conductive terminal (260, 260') includes a head portion (261) configured to pass through the at least one third through hole (2142, 2142') of the cover (214, 214') to be exposed to an outside.

14. The electronic device of any one of claims 11 to 13, wherein the cover (214, 214') includes at least one seating portion (2141, 2141') that is recessed from one surface of the cover (214, 214') and on which a separate electronic device is seated.

15. The electronic device of any one of claims 1 to 14, wherein the pin cover (250) is made of an elastic material.
